# EUROPEAN PATENT SPECIFICATION

(11) **EP 2 993 663 B1**
(45) Date of publication and mention of the grant of the patent: **02.11.2022**
(21) Application number: 15183846.3
(22) Date of filing: 04.09.2015
(51) Int. Cl.: G09G 3/36

(54) **LIQUID CRYSTAL DISPLAY DEVICE**
FLÜSSIGKRISTALLANZEIGEVORRICHTUNG
DISPOSITIF D'AFFICHAGE À CRISTAUX LIQUIDES

(30) Priority: 05.09.2014 KR 20140119344
(43) Date of publication of application: 09.03.2016
(73) Proprietor: LG Display Co., Ltd., Seoul 150-721 (KR)
(72) Inventor: KIM, Kyujin, 413-811 Paju-si, Gyeonggi-do (KR); YOO, Ooksang, 302-280 Daejeon (KR); KIM, Taehun, 413-779 Paju-si, Gyeonggi-do (KR)
(74) Representative: Viering, Jentschura & Partner mbB Patent- und Rechtsanwälte

(56) References cited:
- EP-A1- 2 182 508
- US-A- 5 946 068
- US-A1- 2004 196 241
- US-A1- 2006 244 704
- US-A1- 2007 206 136
- US-A1- 2008 094 388
- US-A1- 2008 117 148
- US-A1- 2008 278 471
- US-A1- 2008 291 144
- US-A1- 2014 176 839

## Description

### BACKGROUND

### Field

This document relates to a liquid crystal display device.

### Related Art

An active matrix driving type liquid crystal display displays video using a thin film transistor (TFT) as a switching element. Compared with cathode ray tubes (CRTs), the liquid crystal display may be reduced in size so as to be applied to display devices of portable information devices, office machines, computers, and the like, and also, applied to televisions, rapidly replacing CRTs.

In a liquid crystal display, pixels are formed as data lines and gate lines intersect each other, and include thin film transistors (TFTs) connected to the intersections of the data lines and the gate lines. In response to a gate pulse from a gate line, each TFT supplies a data voltage supplied through a data line to a pixel electrode of a liquid crystal cell. Driven by an electric field generated according to a voltage difference between a voltage of a pixel electrode and a common voltage Vcom applied to a common electrode, the liquid crystal cell adjusts an amount of light passing through a polarizing plate. A storage capacitor is connected to the pixel electrode of the liquid crystal cell to maintain a voltage of the liquid crystal cell.

The common voltage Vcom applied to the common electrode may cause a ripple phenomenon due to electrical coupling with the pixel electrode. The ripple phenomenon of the common voltage Vcom is proportional to variations of a data voltage over time. Thus, in an inversion scheme driven by varying the polarity of the data voltage, a variation of the data voltage is so large that the ripple phenomenon of the common voltage Vcom becomes severe the moment a polarity of the data voltage is changed. The ripple phenomenon of the common voltage Vcom causes a line dim phenomenon in a horizontal direction, degrading display quality.

US 5 946 068 A describes dummy LCD elements receiving instead of the normal data signals for the other true LCD elements a corresponding dummy data signal. The polarity of that dummy data signal is inverted with respect to the polarity of the data signal driving the data line connected to the LCD elements of the outermost column of true LCD elements in line with the dot inversion technique to drive the LCD elements.

US 2008/0094388 A1 describes that the common signal output circuit buffers the reference voltage in a first period when a period for selecting the scanning line starts, and output the common signal for performing feedback control such that the voltage of the common electrode becomes the reference voltage, in a second period when a period for selecting the scanning line is finished.

US 2014/0176839 A1 describes to generate a current common voltage data supplied to a common electrode by using previous common voltage data and a feedback common voltage that is outputted to the common electrode by the previous common voltage data and fed back therefrom.

Patent application US 2008/291144 A1 describes a liquid crystal display with a common voltage modulator to keep the common voltage of the LCD stable by receiving a distorted common voltage from the common electrode via a first common voltage line and applying a corresponding compensating voltage to the common electrode via a second common voltage line being also connected to the common electrode.

Patent application US 2004/196241 A1 describes replacing a common electrode with a plurality of switch electrodes grouped in sets, where each set is modulated by a different driving circuit, in order to reduce electrical power consumption.

Patent application US 2006/244704 A1 describes a liquid crystal display in which a distortion of the common voltage across the entire region of the liquid crystal is prevented by a first and a second common voltage compensator supplying a first and a second common voltage supply lines, respectively, where the first and second common voltage supply lines are spaced apart and positioned near the edges of the liquid crystal panel.

Patent applications EP 2 182 508 A1, US 2007/206136 A1, US 2008/278471 A1, and US 2008/117148 A1 describe further display devices.

### SUMMARY OF THE INVENTION

The invention is defined in claims 1 and 10.

In one or more embodiments, the at least one compensation capacitor comprises a first compensation capacitor and a second compensation capacitor, wherein the first and second compensation capacitors are arranged at opposite sides of a pixel array region, in which the pixels are arranged.

In one or more embodiments, each pixel comprises: a pixel electrode, and a liquid crystal capacitor formed by the pixel electrode, the common electrode and a liquid crystal layer disposed between the pixel electrode and the common electrode; wherein a capacitance of a compensation capacitor coupled to a horizontal common line is equal to or greater than the sum of capacitances of liquid crystal capacitors coupled to said horizontal common line. The capacitance of the compensation capacitor coupled to said horizontal common line may be less than or equal to 1.5 times the sum of the capacitances of the liquid crystal capacitors coupled to said horizontal common line.

In one or more embodiments, the data driver is configured to increase a level of the compensation data voltage from a predetermined minimum voltage level to a predetermined maximum voltage level during a polarity change interval, in which the polarity of the data voltage is changed from the first polarity to the second polarity, and decrease the level of the compensation data voltage from the predetermined maximum level to the predetermined minimum level during a subsequent polarity maintaining interval, in which the polarity of the data voltage is maintained at the second polarity, wherein the polarity maintaining interval is longer than the polarity change interval. A length of the polarity change interval may be equal to one horizontal driving period and a length of the polarity maintaining interval may be equal to two or more horizontal driving periods.

In one or more embodiments, the predetermined minimum voltage level and the predetermined maximum voltage level of the compensation data voltage are set equal to a lowest possible value and a highest possible value of the data voltage, respectively.

In one or more embodiments, the liquid crystal display device further comprises: a gate driver; a plurality of gate lines and data lines arranged in the direction of the rows and columns, respectively, and coupled to the gate driver and the data driver, respectively, to receive a gate pulse and the data voltage, respectively; at least one dummy data line arranged in parallel with the data lines and coupled to the data driver to receive the compensation data voltage; wherein each pixel comprises a switching transistor coupled to a respective gate line and data line and configured to supply the data voltage from the data driver to a pixel electrode of the pixel upon applying the gate pulse from the gate driver to the gate line; wherein each row comprises at least one additional switching transistor coupled to the at least one dummy data line, to a compensation capacitor corresponding to that row, and to a gate line coupled to the switching transistors of the pixels in that row, wherein the at least one additional switching transistor is configured to supply the compensation data voltage from the data driver to the compensation capacitor upon applying the gate pulse from the gate driver to the gate line. The at least one dummy data line may be arranged outside a pixel array region, in which the pixels are arranged.

In one or more embodiments, the timing controller is configured to synchronize the timing of the compensation data voltage with a timing of the data voltage so as to provide the compensation data voltage with the same time delay to a compensation capacitor corresponding to a row as the data voltage is provided to a pixel in that row. In one or more embodiments, the timing controller is configured to receive digital video data and timing signals.

In one or more embodiments, the timing controller is configured to transmit the digital video data to source drive ICs of the data driver.

In one or more embodiments, the timing controller is configured to generate a source timing control signal for controlling an operation timing of the data driver and a gate timing control signal for controlling an operation timing of the gate driver by using the timing signals.

In one or more embodiments, the power module is configured to receive a source voltage and output a gate high voltage, a gate low voltage, a high potential voltage, and the common voltage.

In one or more embodiments, the gate driver comprises a level shifter connected to the timing controller, and a shift register connected between the level shifter and the gate lines.

In one or more embodiments, the horizontal common lines and the at least one vertical common line have a mesh form.

In one or more embodiments, the compensation data voltage has a positive polarity.

In one or more embodiments, the polarity maintaining interval immediately follows the polarity change interval.

In one or more embodiments, charging the compensation data voltage into the compensation capacitor comprises: increasing a level of the compensation data voltage from a predetermined minimum voltage level to a predetermined maximum voltage level during a polarity change interval, in which the polarity of the data voltage is changed from the first polarity to the second polarity.

In one or more embodiments, the method further comprises: decreasing the level of the compensation data voltage from the predetermined maximum level to the predetermined minimum level during a polarity maintaining interval, in which the polarity of the data voltage is maintained at the second polarity, subsequent to the polarity change interval, wherein the polarity maintaining interval is longer than the polarity change interval. A length of the polarity change interval may be equal to one horizontal driving period and a length of the polarity maintaining interval may be equal to two or more horizontal driving periods.

In one or more embodiments, the method further comprises: synchronizing the timing of the compensation data voltage with a timing of the data voltage so as to provide the compensation data voltage with the same time delay to a compensation capacitor corresponding to a row as the data voltage is provided to a pixel in that row.

In one or more embodiments, the first polarity is a positive polarity and the second polarity is a negative polarity, and the compensation data voltage has a positive polarity.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1 is a view illustrating a configuration of a liquid crystal display (LCD) device according to an embodiment of the present invention.
FIG. 2 is a view illustrating a pixel array region according to a first embodiment.
FIG. 3 is a view illustrating a configuration of a data driver according to an embodiment of the present invention.
FIG. 4 is a view illustrating a planar structure of pixels and compensation capacitors.
FIG. 5 is a cross-sectional view taken along line I-I' of FIG. 4.
FIG. 6 is an equivalent circuit diagram of the pixels and the compensation capacitors of FIG. 4.
FIG. 7 is a view illustrating timing of a data voltage and a compensation data voltage.
FIG. 8 is a view illustrating a ripple cancelation phenomenon of a common voltage.
FIGS. 9(a) and 9(b) are views illustrating an embodiment of an output buffer outputting a compensation data voltage.
FIG. 10 is a view illustrating ripple cancelation of a common voltage by reflecting data voltage delay.
FIG. 11 is a view illustrating a pixel array region according to a second embodiment.

### DETAILED DESCRIPTION OF THE EMBODIMENTS

Hereinafter, embodiments will be described in detail with reference to the accompanying drawings. Throughout the specification, the like reference numerals denote the substantially same elements. In describing the present invention, if a detailed explanation for a related known function or construction is considered to unnecessarily divert the gist of the present invention, such explanation will be omitted but would be understood by those skilled in the art.

Names of elements used in the following description are selected for the description purpose and may be different from those of actual products.

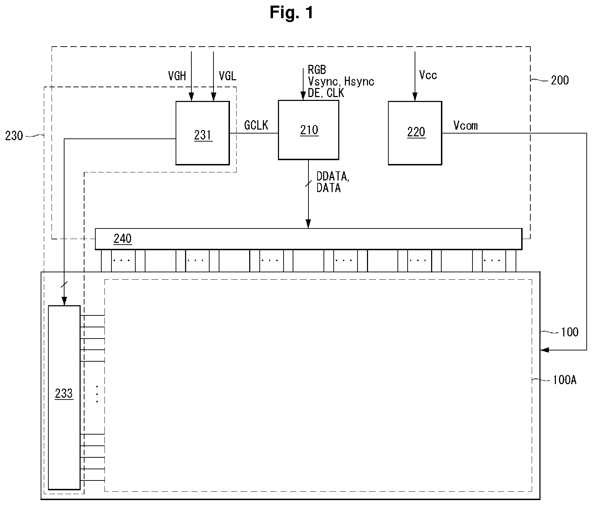

FIG. 1 is a view illustrating a configuration of a liquid crystal display (LCD) device according to an embodiment of the present invention.

Referring to FIG. 1, the LCD device according to an embodiment of the present invention includes a liquid crystal panel 100, a timing controller 210, a power module 220, a gate driver 230, and a data driver 240.

The liquid crystal panel 100 includes a thin film transistor (TFT) array substrate in which a TFT array is formed and a color filter substrate in which color filters are formed, and a liquid crystal layer is formed between the TFT array substrate and the color filter substrate. In the liquid crystal panel 100, a region of the TFT array substrate in which pixels P are arranged will be defined as a pixel array region 100A.

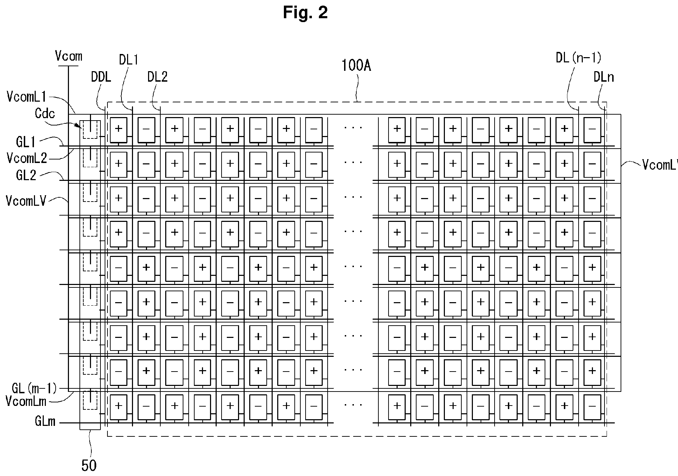

As illustrated in FIG. 2, in the TFT array substrate of the liquid crystal panel 100 according to a first embodiment, pixels P defined by gate lines GL1 to GLm and data lines DL1 to DLn arranged horizontally and vertically, respectively, are arranged in a matrix form. A dummy data line DDL and compensation capacitors Cdc are formed to be parallel to the first data line DL1 on one side of the pixel array region 100A. The first data line DL1 may be an outermost data line of the data lines DL1 to DLn. The compensation capacitors Cdc may be arranged in a row parallel to the first data line DL1. The dummy data line DDL may be disposed between the compensation capacitors Cdc and the first data line DL1.

A common line includes horizontal common lines VcomLl to VcomLm and one or more vertical common lines VcomLV. A common voltage Vcom generated by the power module 220 is supplied to a common electrode by way of the common line. The horizontal common lines VcomLl to VcomLm are disposed to be parallel to the gate lines GL1 to GLm. Each vertical common line VcomLV is disposed vertically in a position outside of the pixel array region 100A and connects the power module 220 and the horizontal common lines VcomLl to VcomLm. The vertical common line VcomLV and the horizontal common lines VcomLl to VcomLm may have a mesh form. In an embodiment, a first vertical common line VcomLV may be disposed proximate the first data line DL1, and a second vertical common line VcomLV may be disposed proximate an n-th data line DLn. The n-th data line DLn may be an outermost data line disposed at a side of the pixel array region 100A which is opposite to the side of the pixel array region 100A where the first data line DL1 is disposed.

Each compensation capacitor Cdc is formed in a position outside of the pixel array region 100A. Details of a structure and a function of the compensation capacitors Cdc will be described hereinafter.

The dummy data line DDL is formed outside of the pixel array region 100A and receives a compensation data voltage ADDATA from the data driver 240.

The timing controller 210 receives digital video data RGB from an external device (e.g., host) (not shown), and receives timing signals such as a vertical synchronization signal Vsync, a horizontal synchronization signal Hsync, a data enable signal Data Enable (DE), and a main clock CLK. The timing controller 210 transmits the digital video data RGB as digital video data DATA to source drive ICs of the data driver 240. The timing controller 210 generates a source timing control signal for controlling an operation timing of the data driver 240 and a gate timing control signal GCLK for controlling an operation timing of the gate driver 230 by using the timing signals Vsync, Hsync, DE, and CLK.

Also, the timing controller 210 generates compensation data DDATA provided to the dummy data line DDL. The compensation data DDATA is output as a compensation data voltage ADDATA through the data driver 240. The compensation data voltage is charged in a compensation capacitor Cdc to suppress ripples of the common voltage Vcom. Details thereof will be described hereinafter.

The power module 220 receives a source voltage VCC and outputs a gate high voltage VGH, a gate low voltage VGL, a high potential voltage VDD, and the common voltage Vcom. The gate high voltage VGH is a high level voltage of a scan pulse supplied to a gate line GL, and the gate low voltage VGL is a low level voltage of a scan pulse supplied to the gate line GL. The common voltage Vcom may have a voltage level within a range from a low potential voltage to a high potential voltage VDD, and for example, the common voltage may have a voltage level of a middle level potential voltage HVDD between the low potential voltage and the high potential voltage VDD.

The gate-in-panel(GIP)-type gate driver 230 includes a level shifter 231 and a shift register 233 mounted on a printed circuit board (PCB) 200.

The level shifter 231 receives a driving voltage such as the gate high voltage VGH or the gate low voltage VGL, receives a start signal ST and a gate clock signal GCLK from the timing controller 210, and outputs a start pulse VST and a clock signal CLK swung between the gate high voltage VGH and the gate low voltage VGL. The clock signals CLK output from the level shifter 231 are sequentially phase-shifted and transmitted to the shift register 233 formed in the display panel 100.

The shift register 233 is connected to the gate lines GL of the display panel 100. The shift register 233 includes a plurality of dependently connected stages. The shift register 233 shifts the start pulse VST input from the level shifter 231 according to the clock signal CLK and sequentially supplies a gate pulse to the gate lines GL1 to GLm.

The data driver 240 receives the digital video data DATA and compensation data DDATA from the timing controller 210. In response to a source timing control signal from the timing controller 210, the data driver 240 converts the digital video data DATA into a positive polarity/negative polarity analog data voltage and subsequently supplies the data voltage to the data lines DL1 to DLn of the display panel 100 such that the data voltage is synchronized with a gate pulse. The data driver 240 converts the (digital) compensation data DDATA into the (analog) compensation data voltage ADDATA and subsequently supplies the compensation data voltage ADDATA to the dummy data line DDL.

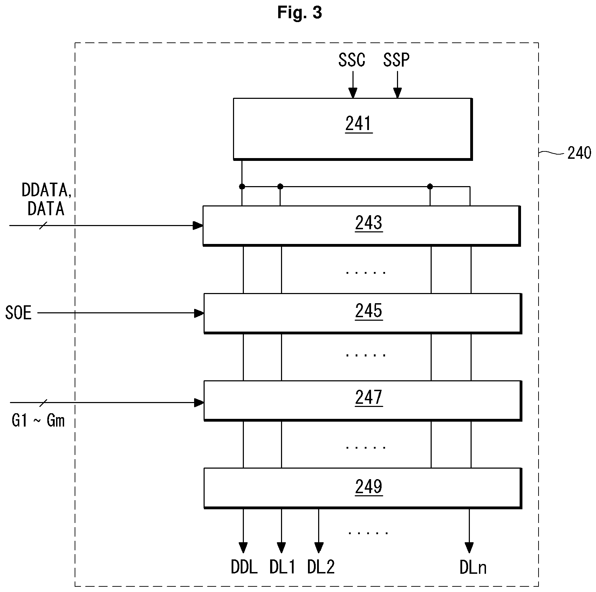

To this end, as illustrated in FIG. 3, the data driver 240 includes a register unit 241, a first latch 243, a second latch 245, a digital-to-analog converter (DAC) 247, and an output unit 249.

The register unit 241 samples RGB digital video data bits of an input image using data control signals SSC and SSP provided from the timing controller 210, and provides the sampled bits to the first latch 243. The RGB digital video data bits are the bits of the digital video data DATA received from the timing controller 210. Also, the register unit 241 provides the compensation data DDATA provided from the timing controller 210 to the first latch 243.

The first latch 243 samples and latches the compensation data DDATA and the digital video data bits (of the digital video data DATA) according to a clock sequentially provided from the register unit 241, and simultaneously outputs the latched compensation data DDATA and digital video data DATA. The second latch 245 latches the compensation data DDATA and the digital video data DATA received from the first latch 243, and simultaneously outputs the latched compensation data DDATA and digital video data DATA in response to a source output enable signal SOE.

The DAC 247 converts the compensation data DDATA and digital video data DATA received from the second latch 245 into a gamma compensation voltage GMA using or based on gamma voltages G1 to Gm (e.g., m analog voltage levels G1 to Gm; for example m = 255) to generate an analog compensation data voltage ADDATA and a video data voltage ADATA.

The output unit 249 provides the analog compensation data voltage ADDATA output from the DAC 247 to the dummy data line DDL and provides the video data voltage ADATA to the data lines DL1 to DLn during a low logical period of the source output enable signal SOE.

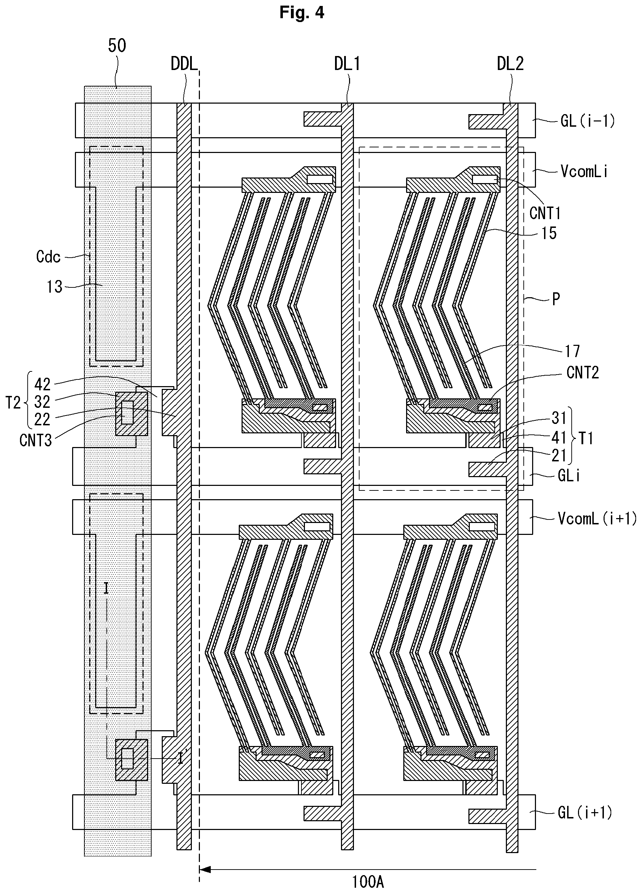

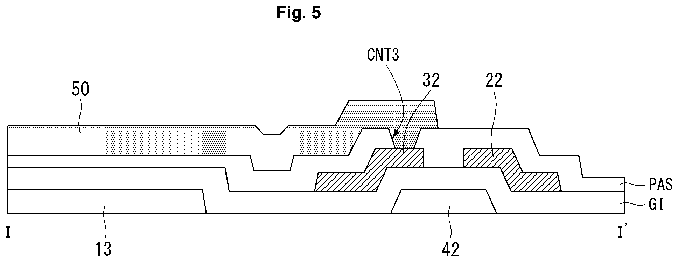

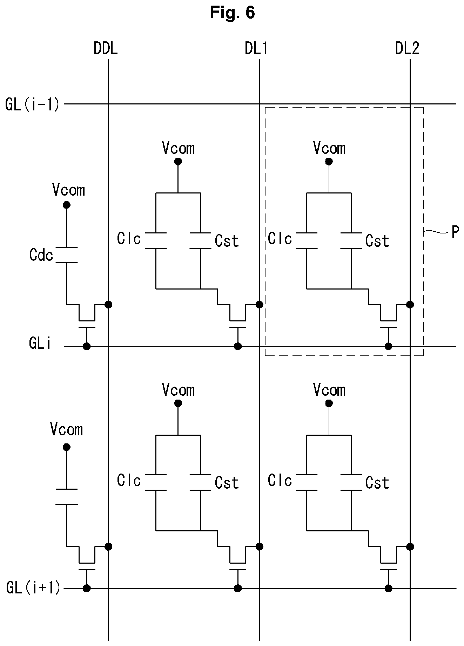

FIG. 4 is a plan view illustrating pixels P and compensation capacitors Cdc, FIG. 5 is a cross-sectional view taken along line I-I' of FIG. 4, and FIG. 6 is an equivalent circuit diagram of FIG. 4.

The configuration of the compensation capacitors Cdc and the pixels P will be described with reference to FIGS. 4 through 6. Gate lines GL(1) to GLm, horizontal common lines VcomLl to VcomLm, data lines DL1 to DLn, dummy data line DDL, and dummy common electrodes 13 are formed on a substrate. As an example, Fig. 4 shows four pixels P, (i-1)th to (i+1)th gate lines GL(i-1), GLi, GL(i+1), i-th and (i+1)th horizontal common lines VcomLi and VcomL(i+1), first and second data lines DL1 and DL2, dummy data line DDL, and two dummy common electrodes 13 associated with i-th horizontal common line VcomLi and (i+1)th horizontal common line VcomL(i+1), respectively. In the following descriptions, when it is not necessary to distinguish between the horizontal common lines, the data lines the gate lines according to their positions, the horizontal common lines, the data lines and the gate lines will be generally described as a horizontal common line VcomL, a data line DL and a gate line GL. Also, the same components included in the pixels P or the compensation capacitors Cdc will also be described using the same reference numeral.

Each horizontal common line VcomL is formed to be parallel to the gate line GL. The dummy common electrode 13 is formed to be perpendicular to the gate line GL. The dummy common electrode 13 is branched from one side of the horizontal common line VcomL and formed in a vertical direction. First gate electrodes 41 and at least one second gate electrode 42 branched in a vertical direction are formed on one side of the gate line GL. The at least one second gate electrode 42 is branched from the gate line GL outside of the pixel array region 100A. The gate line GL, the horizontal common line VcomL, and the dummy common electrode 13 may be formed of a gate metal material through the same process.

A gate insulating layer GI is formed on the entire upper portion of the gate line GL, the horizontal common line VcomL, and the dummy common electrode 13.

The data line DL, the dummy data line DDL, first and second drain electrodes 21 and 22, and first and second source electrodes 31 and 32 are formed on the gate insulating layer GI.

The first drain electrode 21 is formed to protrude from the data line DL in a region where the first gate electrode 41 is positioned. The first source electrode 31 is formed to be adjacent to the first drain electrode 21. The first gate electrode 41, the first drain electrode 21, and the first source electrode 31 form a first transistor T1. In response to a gate pulse provided from the gate line GL, the first transistor T1 provides a data voltage provided from the data line DL to a pixel electrode 17.

The dummy data line DDL includes the second drain electrode 22 protruding from a region where the second gate electrode 42 is positioned. The second source electrode 32 is formed to be adjacent to the second drain electrode 22. The second gate electrode 42, the second drain electrode 22, and the second source electrode 32 form a second transistor T2, and in response to a gate pulse provided from the gate line GL, the second transistor T2 provides a compensation data voltage provided from the dummy data line DDL to a conductive pattern 50. In the following, the conductive pattern 50 will be described as a metal pattern 50. However, the conductive pattern 50 may include or may be made of conductive materials other than metal.

As shown in Fig. 4, the second transistor T2 may be disposed outside the pixel array region 100A. Furthermore, although not shown in the figures, an active layer (e.g., a semiconductor layer) may be provided between the gate insulating layer GI and the first source and drain electrodes 21, 31 and overlapped by the first gate electrode 41 to provide an electrically conductive channel between the first source and drain electrodes 21, 31, and between the gate insulating layer GI and the second source and drain electrodes 22, 32 and overlapped by the second gate electrode 42 to provide an electrically conductive channel between the second source and drain electrodes 22, 32.

A passivation layer PAS is formed on the data line DL, the dummy data line DDL, the first and second drain electrodes 21 and 22, and the first and second source electrodes 31 and 32.

A pixel electrode 17, a common electrode 15, and the metal pattern 50 are formed on the passivation layer PAS. The pixel electrode 17, the liquid crystal layer, and the common electrode 15 form a liquid crystal capacitor Clc to display a gray level corresponding to a data voltage. The storage capacitor Cst stores a data signal during one frame to constantly maintain a voltage of the pixel electrode.

The metal pattern 50 is formed to face the dummy common electrode 13, and the dummy common electrode 13 and the metal pattern 50 form the compensation capacitor Cdc with an insulating layer interposed therebetween. The compensation capacitor Cdc is charged to a compensation data voltage provided from the dummy data line DDL and cancels out ripples of the common voltage Vcom during the process of charging the compensation data voltage.

A method for suppressing ripples of the common voltage Vcom by the compensation capacitor Cdc will be described.

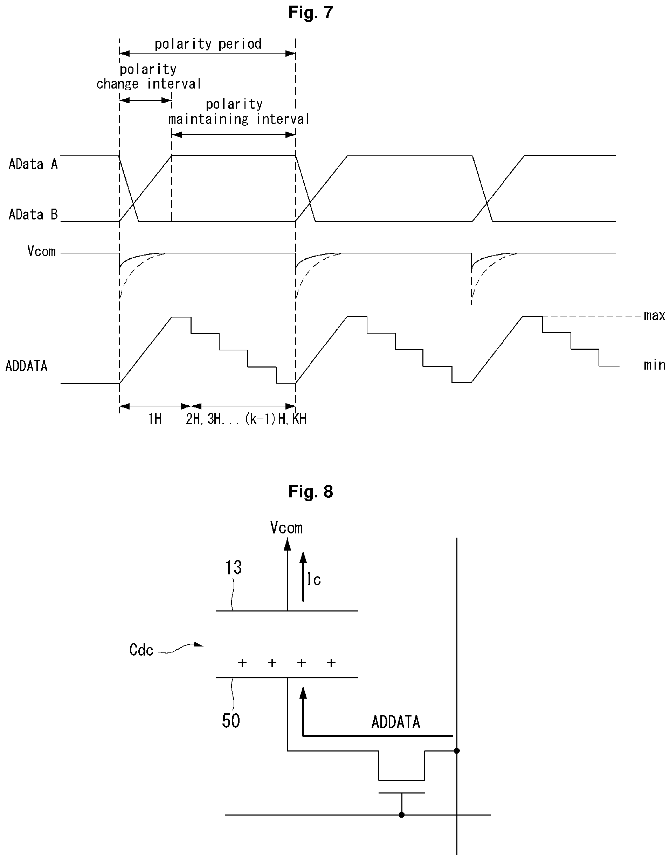

FIG. 7 is a timing diagram illustrating a change in polarity of a data voltage and an output of a compensation data voltage corresponding thereto.

In FIG. 7, a first data voltage Adata A and a second data voltage Adata B are data voltages provided to data lines DL in columns adjacent to each other. Polarities of the first and second data voltages Adata A and Adata B are maintained during a polarity maintaining interval and reversed during a polarity change interval of a next polarity period. In Fig.7, a solid line is a timing diagram illustrating common voltage Vcom according to the embodiment of the invention, and a dashed line is a timing diagram illustrating common voltage Vcom according to the related art.

The compensation data voltage ADDATA starts to be output at a point in time at which the polarities of the first and second data voltages Adata A and Adata B are changed, and rapidly rises to a predetermined level. The compensation data voltage ADDATA, which has risen to a preset maximum voltage level, gradually falls until before the polarities start to be changed.

The compensation data voltage ADDATA whose voltage level rapidly rises at a voltage change time rapidly charges a compensation capacitor Cdc. If the voltage level of the compensation data voltage ADDATA were rapidly lowered, negative polarity ripples might be generated in the common voltage. Therefore, in accordance with various embodiments, the voltage level of the compensation data voltage ADDATA slowly falls. For example, when a polarity of the data voltage (e.g., first data voltage AData B or second data voltage AData B) is reversed in every k-th horizontal period (k is a natural number ranging from 2 to m/2), a voltage level of the compensation data voltage ADDATA rapidly rises during a first horizontal period and gradually falls during subsequent k-1 horizontal periods, as shown in Fig. 7, which shows rising of the voltage level of ADDATA during a first horizontal period 1H and falling of the voltage level during k-1 subsequent horizontal periods 2H, 3H, ..., (k-1)H, kH (where 2H denotes a second horizontal period, 3H denotes a third horizontal period, ..., (k-1)H denotes a (k-1)-th horizontal period, and kH denotes a k-th horizontal period).

The compensation data voltage ADDATA whose voltage level rapidly rises during the rising interval is provided to the metal pattern 50. When the metal pattern 50 receives the compensation data voltage ADDATA, the compensation capacitor Cdc is charged with the compensation data voltage ADDATA as illustrated in FIG. 8. Since the metal pattern 50 is charged by the positive polarity compensation data voltage ADDATA, a compensation current Ic is induced in a direction toward the dummy common electrode 13 from the metal pattern 50 in the compensation capacitor Cdc. The compensation current Ic induced during the process of charging the compensation capacitor Cdc flows to the common electrode 15 through the dummy common electrode 13. Thus, negative polarity ripples generated in the common electrode 15 are canceled out.

Since the ripples generated in the common electrode 15 are instantaneously generated during a period in which the polarities of the first and second data voltages Adata A and Adata B are changed, the compensation data voltage ADDATA for canceling the ripples is set such that a voltage level thereof is significantly changed during a short period of time. That is, a minimum voltage level min and a maximum voltage level max of the compensation data voltage ADDATA may be set as the lowest value and the highest value of the data voltage, respectively. For example, the minimum voltage level min of the compensation data voltage ADDATA may be set to a voltage level corresponding to a gray level 0, and the maximum voltage level max may be set to a voltage level corresponding to a gray level 255.

Capacitance of the compensation capacitor Cdc is equal to or greater than the sum of the liquid crystal capacitors Clc of the horizontal lines, and is set to equal to or less than 1.5 times the sum of the capacitances of the liquid crystal capacitors. As described above, the compensation capacitor Cdc cancels out ripples of the common electrode 15 using that the induced current within the compensation capacitor Cdc flows to the common electrode 15. Thus, in order to supply a compensation current Ic to every pixel P connected to one horizontal line, capacitance of the compensation capacitor Cdc is equal to or greater than the sum of the capacitances of the liquid crystal capacitors. A maximum value of the capacitance of the compensation capacitor Cdc may be equal to or greater than the sum of the capacitances of the liquid crystal capacitors, and a maximum value thereof may vary according to design margins of the compensation capacitor Cdc. For example, a maximum value of the capacitances of the compensation capacitors Cdc may be set to a value equal to or smaller than 1.5 times the sum of the capacitances of the liquid crystal capacitors.

A polarity of the compensation data voltage ADDATA may be changed according to potentials of ripples of the common voltage Vcom, or may be maintained at a predetermined positive polarity voltage level as illustrated in FIG. 7. The reason why the potential of the compensation data voltage ADDATA is maintained to have the positive polarity as illustrated in FIG. 7 is because the ripples of the common voltage Vcom mainly have a negative polarity. The ripples of the common voltage Vcom are proportional to a variation of voltage levels of the first and second data voltages Adata A and Adata B. That is, as illustrated in FIG. 7, the moment polarities of the first and second data voltages Adata A and Adata B are changed from a positive polarity to a negative polarity, a voltage variation per unit time is large, and the moment polarities of the first and second data voltages Adata A and Adata B are changed from a negative polarity to a positive polarity, a voltage variation per unit time is small. Thus, ripples of the common voltage Vcom are severe the moment the polarities of the first and second data voltages Adata A and Adata B are changed to the negative polarity. Since the ripples of the common voltage Vcom are generated mainly as having a negative polarity, the compensation data voltage ADDATA constantly maintains a positive polarity voltage.

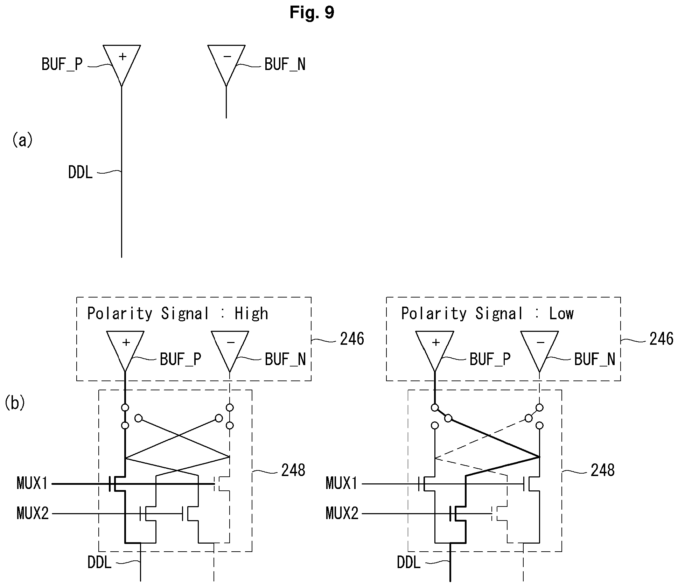

In order to maintain the potential of the compensation data voltage ADDATA as having a positive polarity, in an output buffer outputting the compensation data voltage ADDATA to the dummy data line DDL, only a P buffer BUF_P outputting a positive polarity voltage may be connected to the dummy data line DDL as illustrated in (a) of FIG. 9. In (b) of Fig. 9, a buffer unit 246 and the dummy data line DDL are connected using a multiplexer 248. The multiplexer 248 connects the P buffer BUF_P and the dummy data line DDL regardless of a first selection signal MUX1 or a second selection signal MUX2. So, the N buffer BUF_N is not connected to the dummy data line DDL. As described above, in the LCD device according to an embodiment of the present invention, ripples generated in the common voltage Vcom are suppressed by using the compensation data voltage ADDATA charged in the compensation capacitor Cdc during the polarity change interval. In particular, since the compensation data voltage ADDATA is switched by a gate pulse provided to each horizontal line so as to be supplied to the compensation capacitor Cdc, delay of the ripples of the common voltage Vcom may be reflected for compensation.

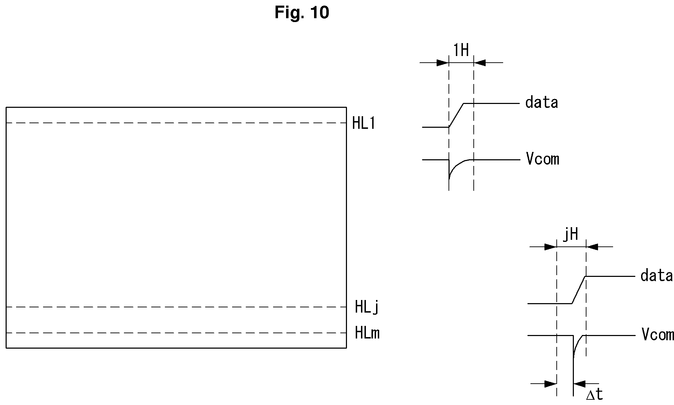

The delay phenomenon of the ripples of the common voltage Vcom results from a delay phenomenon of the data voltage ADATA as illustrated in FIG. 10. The data voltage ADATA is output from the data driver 240 and supplied from a first horizontal line HL1 (of pixels) to an mth horizontal line HLm (of pixels). A data voltage supplied to a jth horizontal line HLj (of pixels) positioned away from the data driver 240 is delayed by △t relative to a point in time at which the jth horizontal period jH starts due to the data delay phenomenon. Thus, the ripples of the common voltage Vcom are also delayed by △t.

In the LCD device according to an embodiment of the present invention, the compensation data voltage ADDATA is delayed by the same timing and synchronized with a timing at which the data voltage ADATA is provided to the pixel P by a gate pulse, so as to be provided to the compensation capacitor Cdc. Thus, the compensation capacitor Cdc may effectively suppress ripples of the common voltage Vcom in response to a timing at which the ripples of the common voltage Vcom are generated in each horizontal line.

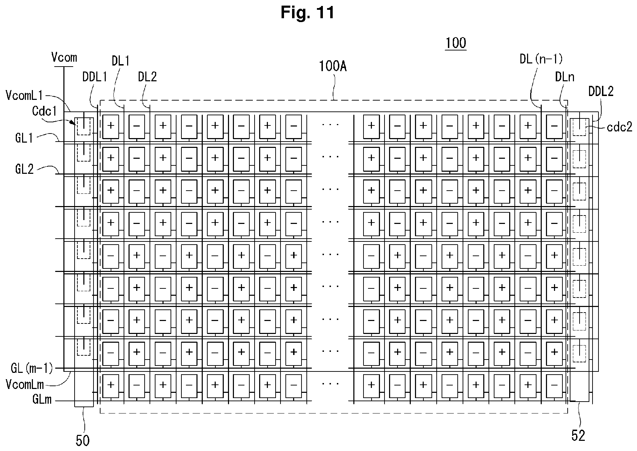

FIG. 11 is a view illustrating a planar structure of a TFT array substrate of a liquid crystal panel according to a second embodiment.

Referring to FIG. 11, in the TFT array substrate of a liquid crystal panel 100 according to the second embodiment, pixels P defined by gate lines GL1 to GLm and data lines DL1 to DLm arranged horizontally and vertically, respectively, are arranged in a matrix form. A first dummy data line DDL1 and first compensation capacitors Cdcl are formed to be parallel to the first data line DL1 on one side of a pixel array region 100A. Also, a second dummy data line DDL2 and second compensation capacitors Cdc2 are formed to be parallel to the nth data line DLn on the other side of the pixel array region 100A. In the second embodiment, the same reference numerals will be used for components substantially the same as those of the first embodiment and detailed descriptions thereof will be omitted.

The first and second compensation capacitors Cdcl and Cdc2 have a dummy common electrode and a metal pattern 50 branched from each of the horizontal common lines VcomLl to VcomLm as an electrode pair, and are formed in positions outside of the pixel array region 100A. In the second embodiment, since the first and second compensation capacitors Cdcl and Cdc2 are formed on both sides of the pixel array region 100A, capacitances of the first and second compensation capacitors Cdcl and Cdc2 may be designed to be smaller than that of a case using a single compensation capacitor. That is, a design margin of the compensation capacitor Cdc may be secured.

In this manner, since ripples of the common voltage are canceled out by a compensation voltage generated when the compensation capacitor is charged, a line-dim phenomenon due to ripples of the common voltage may be improved.

## Claims

1. A liquid crystal display device, comprising:
a plurality of pixels (P) arranged in rows and columns in a matrix form;
a plurality of m horizontal common lines (VcomLl, ..., VcomLm) arranged in the direction of the rows and coupled to a common electrode (15) of the plurality of pixels; and at least one vertical common line (VcomLV) arranged in the direction of the columns and connecting the m horizontal common lines (VcomLl, ..., VcomLm) to one another; a vertical dummy data line (DDL);
a power module (220) configured to supply a common voltage (Vcom) to the at least one vertical common line common line (VcomL);
at least one compensation capacitor (Cdc) comprising a conductive pattern (50), a dummy common electrode (13) coupled to a respective horizontal common line (VcomLi) and an insulating layer disposed between the dummy common electrode (13) and the conductive pattern (50);
a data driver (240) coupled by means of the vertical dummy data line (DDL) to the conductive pattern (50) of the at least one compensation capacitor (Cdc), the data driver (240) being configured to:
apply a data voltage (ADATA) having a first polarity to a pixel (P) of the plurality of pixels (P);
subsequently change the polarity of the data voltage (ADATA) from the first polarity to a second polarity; and
apply an analog compensation data voltage (ADDATA) by means of the vertical dummy data line (DDL) into the at least one compensation capacitor (Cdc) while changing the polarity of the data voltage (ADATA) from the first polarity to the second polarity, so as to reduce ripples in a common voltage (Vcom) applied to the horizontal common lines (VcomLl, ..., VcomLm);
the liquid crystal display device further comprising:
a timing controller (210) configured to generate a digital compensation data (DDATA) and provide the digital compensation data (DDATA) to the data driver (240),
wherein the data driver (240) is configured to convert the digital compensation data (DDATA) into the analog compensation data voltage (ADDATA).

2. The liquid crystal display device of claim 1, comprising:
m compensation capacitors (Cdc), each of the m compensation capacitors being coupled to a respective horizontal common line (VcomLi),
wherein the at least one vertical common line (VcomLV) is arranged outside a pixel array region (100A), in which the pixels (P) are arranged.

3. The liquid crystal display device of claim 2, wherein each of the m compensation capacitors (Cdc) comprises:
a respective dummy common electrode (13) that branches from the respective horizontal common line (VcomLi),
a respective conductive pattern (50) that faces the dummy common electrode (13), and
a respective insulating layer disposed between the dummy common electrode (13) and the conductive pattern (50) .

4. The liquid crystal display device of claim 2 or 3, wherein each of the m compensation capacitors (Cdc) comprises a first compensation capacitor (Cdcl) and a second compensation capacitor (Cdc2), wherein the first and second compensation capacitors (Cdcl, Cdc2) are arranged at opposite sides of a pixel array region (100A), in which the pixels (P) are arranged.

5. The liquid crystal display device of any one of claims 2 to 4, wherein each pixel (P) comprises:
a pixel electrode (17), and a liquid crystal capacitor (Clc) formed by the pixel electrode (17), the common electrode (15) and a liquid crystal layer disposed between the pixel electrode (17) and the common electrode (15) ;
wherein a capacitance of a compensation capacitor (CdC) coupled to a horizontal common line (VcomL) is equal to or greater than the sum of capacitances of liquid crystal capacitors (Clc) coupled to said horizontal common line (VcomL),
wherein, preferably, the capacitance of the compensation capacitor (Cdc) coupled to said horizontal common line (VcomL) is less than or equal to 1.5 times the sum of the capacitances of the liquid crystal capacitors (Clc) coupled to said horizontal common line (VcomL).

6. The liquid crystal display device of any one of claims 1 to 5,
wherein the analog compensation data voltage (ADDATA) rises from a predetermined minimum voltage level to a predetermined maximum voltage level during a polarity change interval, starting at a point in time at which the polarity of the data voltage (ADATA) is changed from the first polarity to the second polarity, and decrease the level of the compensation data voltage (ADDATA) from the predetermined maximum level to the predetermined minimum level during a subsequent polarity maintaining interval, in which the polarity of the data voltage (ADATA) is maintained at the second polarity,
wherein the polarity maintaining interval is longer than the polarity change interval,
wherein, preferably, a length of the polarity change interval is equal to one horizontal driving period and a length of the polarity maintaining interval is equal to two or more horizontal driving periods.

7. The liquid crystal display device of claim 6, wherein the predetermined minimum voltage level and the predetermined maximum voltage level of the analog compensation data voltage (ADDATA) are set equal to a lowest possible value and a highest possible value of the data voltage (ADATA), respectively.

8. The liquid crystal display device of any one of claims 2 to 7, further comprising:
a gate driver (230);
a plurality of gate lines (GL1 to GLm) and data lines (DL to DLn) arranged in the direction of the rows and columns, respectively, and coupled to the gate driver (230) and the data driver (240), respectively, to receive a gate pulse and the data voltage (ADATA), respectively;
the at least one vertical dummy data line (DDL) is arranged in parallel with the data lines (DL1, ..., DLn) and coupled to the data driver (240) to receive the analog compensation data voltage (ADDATA);
wherein each pixel (P) comprises a switching transistor coupled to a respective gate line (GL1 to GLm) and data line and configured to supply the data voltage (ADATA) from the data driver (240) to a pixel electrode (17) of the pixel (P) upon applying the gate pulse from the gate driver (230) to the gate line (GL1 to GLm);
wherein each row comprises at least one additional switching transistor coupled to the at least one vertical dummy data line (DDL), to a compensation capacitor (Cdc) corresponding to that row, and to a gate line (GL1 to GLm) coupled to the switching transistors of the pixels (P) in that row, wherein the at least one additional switching transistor is configured to supply the analog compensation data voltage (ADDATA) from the data driver (240) to the compensation capacitor (Cdc) upon applying the gate pulse from the gate driver (230) to the gate line (GL1 to GLm),
wherein, preferably, the at least one vertical dummy data line (DDL) is arranged outside a pixel array region (100A), in which the pixels (P) are arranged.

9. The liquid crystal display device of claim 8, wherein the timing controller (210) is configured to synchronize the timing of the compensation data voltage (ADDATA) with a timing of the data voltage (ADATA) so as to provide the compensation data voltage (ADDATA) with the same time delay to a compensation capacitor (Cdc) corresponding to a row as the data voltage (ADATA) is provided to a pixel (P) in that row.

10. A method of driving a liquid crystal display device as defined in claim 1, the method comprising:
generating digital compensation data (DDATA) by the timing controller (210);
converting the digital compensation data (DDATA) into analog compensation data voltage (ADDATA) by the data driver (240);
applying a data voltage (ADATA) having a first polarity to a pixel (P) of the plurality of pixels (P) by the data driver (240);
subsequently changing the polarity of the data voltage (ADATA) from the first polarity to a second polarity by the data driver (240); and
applying the analog compensation data voltage (ADDATA) to the conductive pattern (50) of the at least one compensation capacitor (Cdc) coupled to the respective horizontal common line (VcomLi) by means of the vertical dummy data line (DDL) while changing the polarity of the data voltage (ADATA) from the first polarity to the second polarity, so as to charge the at least one compensation capacitor (Cdc) by the compensation data voltage (ADDATA) to reduce ripples in the common voltage (Vcom) applied to the horizontal common lines (VcomLl, VcomL2, ... VcomLm) .

11. The method of claim 10, wherein charging the analog compensation data voltage (ADDATA) into the at least one compensation capacitor (Cdc) comprises:
increasing a level of the analog compensation data voltage (ADDATA) from a predetermined minimum voltage level to a predetermined maximum voltage level during a polarity change interval, starting at a point in time at which the polarity of the data voltage (ADATA) is changed from the first polarity to the second polarity.

12. The method of claim 11, further comprising:
decreasing the level of the analog compensation data voltage (ADDATA) from the predetermined maximum level to the predetermined minimum level during a polarity maintaining interval, in which the polarity of the data voltage (ADATA) is maintained at the second polarity, subsequent to the polarity change interval,
wherein the polarity maintaining interval is longer than the polarity change interval,
wherein, preferably, a length of the polarity change interval is equal to one horizontal driving period and a length of the polarity maintaining interval is equal to two or more horizontal driving periods.

13. The method of any one of claims 10 to 12, further comprising: synchronizing the timing of the analog compensation data voltage (ADDATA) with a timing of the data voltage (ADATA) so as to provide the analog compensation data voltage (ADDATA) with the same time delay to a compensation capacitor (Cdc) corresponding to a row as the data voltage (ADATA) is provided to a pixel (P) in that row.

14. The method of any one of claims 10 to 13, wherein the first polarity is a positive polarity and the second polarity is a negative polarity, and wherein the analog compensation data voltage (ADDATA) has a positive polarity.

## Patentansprüche

1. Flüssigkristallanzeigevorrichtung, aufweisend:
eine Vielzahl von Pixeln (P), die in Zeilen und Spalten in Matrixform angeordnet sind;
eine Vielzahl von m horizontalen gemeinsamen Leitungen (VcomLl, ..., VcomLm), die in Richtung der Zeilen angeordnet und mit einer gemeinsamen Elektrode (15) der Vielzahl von Pixeln gekoppelt sind; und
mindestens eine vertikale gemeinsame Leitung (VcomLV), die in Richtung der Spalten angeordnet ist und die m horizontalen gemeinsamen Leitungen (VcomLl, ..., VcomLm) miteinander verbindet;
eine vertikale Dummy-Datenleitung (DDL);
ein Leistungsmodul (220), das dazu konfiguriert ist, eine gemeinsame Spannung (Vcom) an die mindestens eine vertikale gemeinsame Leitung (VcomL) zu liefern;
mindestens einen Kompensationskondensator (Cdc), der ein leitendes Muster (50), eine mit einer entsprechenden horizontalen gemeinsamen Leitung (VcomLi) gekoppelte gemeinsame Dummy-Elektrode (13) und eine zwischen der gemeinsamen Dummy-Elektrode (13) und dem leitenden Muster (50) angeordnete Isolierschicht aufweist;
einen Datentreiber (240), der mittels der vertikalen Dummy-Datenleitung (DDL) mit dem leitfähigen Muster (50) des mindestens einen Kompensationskondensators (Cdc) gekoppelt ist, wobei der Datentreiber (240) konfiguriert ist zum:
Anlegen einer Datenspannung (ADATA) mit einer ersten Polarität an ein Pixel (P) der Vielzahl von Pixeln (P);
anschließend Ändern der Polarität der Datenspannung (ADATA) von der ersten Polarität auf eine zweite Polarität; und
Anlegen einer analogen Kompensationsdatenspannung (ADDATA) mittels der vertikalen Dummy-Datenleitung (DDL) in den mindestens einen Kompensationskondensator (Cdc), während die Polarität der Datenspannung (ADATA) von der ersten Polarität zu der zweiten Polarität geändert wird, um Welligkeiten in einer gemeinsamen Spannung (Vcom) zu reduzieren, die an die horizontalen gemeinsamen Leitungen (VcomLl, ..., VcomLm) angelegt wird;
die Flüssigkristallanzeigevorrichtung ferner aufweisend:
eine Zeitsteuerung (210), die dazu konfiguriert ist, digitale Kompensationsdaten (DDATA) zu erzeugen und die digitalen Kompensationsdaten (DDATA) dem Datentreiber (240) bereitzustellen,
wobei der Datentreiber (240) so konfiguriert ist, dass er die digitalen Kompensationsdaten (DDATA) in die analoge Kompensationsdatenspannung (ADDATA) umwandelt.

2. Flüssigkristallanzeigevorrichtung nach Anspruch 1, aufweisend:
m Ausgleichskondensatoren (Cdc), jeder der m Ausgleichskondensatoren gekoppelt mit einer entsprechenden horizontalen gemeinsamen Leitung (VcomLi),
wobei die mindestens eine vertikale gemeinsame Leitung (VcomLV) außerhalb eines Pixelarraybereichs (100A) angeordnet ist, in dem die Pixel (P) angeordnet sind.

3. Flüssigkristallanzeigevorrichtung nach Anspruch 2, wobei jeder der m Kompensationskondensatoren (Cdc) aufweist:
eine jeweilige gemeinsame Dummy-Elektrode (13), die von der jeweiligen horizontalen gemeinsamen Leitung (VcomLi) abzweigt,
ein jeweiliges leitfähiges Muster (50), das der gemeinsamen Dummy-Elektrode (13) zugewandt ist, und
eine jeweilige Isolierschicht, die zwischen der gemeinsamen Dummy-Elektrode (13) und dem leitfähigen Muster (50) angeordnet ist.

4. Flüssigkristallanzeigevorrichtung nach Anspruch 2 oder 3, wobei jeder der m Kompensationskondensatoren (Cdc) einen ersten Kompensationskondensator (Cdcl) und einen zweiten Kompensationskondensator (Cdc2) aufweist, wobei die ersten und zweiten Kompensationskondensatoren (Cdcl, Cdc2) an gegenüberliegenden Seiten eines Pixelarraybereichs (100A) angeordnet sind, in dem die Pixel (P) angeordnet sind.

5. Flüssigkristallanzeigevorrichtung nach einem der Ansprüche 2 bis 4, wobei jedes Pixel (P) aufweist:
eine Pixelelektrode (17) und einen Flüssigkristallkondensator (Clc), der durch die Pixelelektrode (17), die gemeinsame Elektrode (15) und eine zwischen der Pixelelektrode (17) und der gemeinsamen Elektrode (15) angeordnete Flüssigkristallschicht gebildet ist,
wobei eine Kapazität eines Kompensationskondensators (CdC), der mit einer horizontalen gemeinsamen Leitung (VcomL) gekoppelt ist, gleich oder größer als die Summe der Kapazitäten von Flüssigkristallkondensatoren (Clc) ist, die mit der genannten horizontalen gemeinsamen Leitung (VcomL) gekoppelt sind, wobei, vorzugsweise, die Kapazität des mit der genannten horizontalen gemeinsamen Leitung (VcomL) gekoppelten Kompensationskondensators (Cdc) kleiner oder gleich dem 1,5-fachen der Summe der Kapazitäten der mit der genannten horizontalen gemeinsamen Leitung (VcomL) gekoppelten Flüssigkristallkondensatoren (Clc) ist.

6. Flüssigkristallanzeigevorrichtung nach einem der Ansprüche 1 bis 5,
wobei die analoge Kompensationsdatenspannung (ADDATA) von einem vorbestimmten minimalen Spannungspegel auf einen vorbestimmten maximalen Spannungspegel während eines Polaritätsänderungsintervalls ansteigt, beginnend zu einem Zeitpunkt, zu dem die Polarität der Datenspannung (ADATA) von der ersten Polarität auf die zweite Polarität geändert wird, und Verringern des Pegels der Kompensationsdatenspannung (ADDATA) von dem vorbestimmten Maximalpegel auf den vorbestimmten Minimalpegel während eines nachfolgenden Polaritätserhaltungsintervalls, in dem die Polarität der Datenspannung (ADATA) auf der zweiten Polarität gehalten wird,
wobei das Polaritätserhaltungsintervall länger ist als das Polaritätsänderungsintervall,
wobei, vorzugsweise, eine Länge des Polaritätsänderungsintervalls gleich einer horizontalen Ansteuerperiode ist und eine Länge des Polaritätserhaltungsintervalls gleich zwei oder mehr horizontalen Ansteuerperioden ist.

7. Flüssigkristallanzeigevorrichtung nach Anspruch 6, wobei der vorbestimmte minimale Spannungspegel und der vorbestimmte maximale Spannungspegel der analogen Kompensationsdatenspannung (ADDATA) gleich einem niedrigstmöglichen Wert bzw. einem höchstmöglichen Wert der Datenspannung gesetzt sind (ADATA).

8. Flüssigkristallanzeigevorrichtung nach einem der Ansprüche 2 bis 7, ferner aufweisend:
einen Gate-Treiber (230);
eine Vielzahl von Gateleitungen (GL1 bis GLm) und Datenleitungen (DL bis DLn), die in Richtung der Zeilen bzw. Spalten angeordnet und mit dem Gatetreiber (230) bzw. dem Datentreiber (240) verbunden sind, um einen Gate-Impuls bzw. die Datenspannung (ADATA) zu empfangen;
die mindestens eine vertikale Dummy-Datenleitung (DDL) ist parallel zu den Datenleitungen (DL1, ..., DLn) angeordnet und mit dem Datentreiber (240) gekoppelt, um die analoge Kompensationsdatenspannung (ADDATA) zu empfangen;
wobei jedes Pixel (P) einen Schalttransistor aufweist, der mit einer jeweiligen Gate-Leitung (GL1 bis GLm) und Datenleitung gekoppelt ist und konfiguriert ist, um die Datenspannung (ADATA) von dem Datentreiber (240) an eine Pixelelektrode (17) des Pixels (P) beim Anlegen des Gate-Impulses vom Gate-Treiber (230) an die Gate-Leitung (GL1 bis GLm) zu liefern;
wobei jede Zeile mindestens einen zusätzlichen Schalttransistor aufweist, der mit der mindestens einen vertikalen Dummy-Datenleitung (DDL), einem dieser Zeile entsprechenden Kompensationskondensator (Cdc) und einer mit den Schalttransistoren der Pixel (P) in dieser Zeile gekoppelten Gate-Leitung (GL1 bis GLm) gekoppelt ist, wobei der mindestens eine zusätzliche Schalttransistor dazu konfiguriert ist, die analoge Kompensationsdatenspannung (ADDATA) von dem Datentreiber (240) an den Kompensationskondensator (Cdc) beim Anlegen des Gate-Impulses vom Gate-Treiber (230) an die Gate-Leitung (GL1 bis GLm) zu liefern,
wobei, vorzugsweise, die mindestens eine vertikale Dummy-Datenleitung (DDL) außerhalb eines Pixelarraybereichs (100A) angeordnet ist, in dem die Pixel (P) angeordnet sind.

9. Flüssigkristallanzeigevorrichtung nach Anspruch 8, wobei die Zeitsteuerung (210) konfiguriert ist, um das Timing der Kompensationsdatenspannung (ADDATA) mit einem Timing der Datenspannung (ADATA) zu synchronisieren, um die Kompensationsdatenspannung (ADDATA) mit der gleichen Zeitverzögerung an einen Kompensationskondensator (Cdc), der einer Zeile entspricht, bereitzustellen, mit der die Datenspannung (ADATA) einem Pixel (P) in dieser Zeile zugeführt wird.

10. Verfahren zum Ansteuern einer Flüssigkristallanzeigevorrichtung nach Anspruch 1, wobei das Verfahren aufweist:
Erzeugen digitaler Kompensationsdaten (DDATA) durch die Zeitsteuerung (210);
Umwandeln der digitalen Kompensationsdaten (DDATA) in eine analoge Kompensationsdatenspannung (ADDATA) durch den Datentreiber (240);
Anlegen einer Datenspannung (ADATA) mit einer ersten Polarität an ein Pixel (P) der Vielzahl von Pixeln (P) durch den Datentreiber (240);
anschließendes Ändern der Polarität der Datenspannung (ADATA) von der ersten Polarität zu einer zweiten Polarität durch den Datentreiber (240); und
Anlegen der analogen Kompensationsdatenspannung (ADDATA) an das leitfähige Muster (50) des mindestens einen Kompensationskondensators (Cdc), der mit der jeweiligen horizontalen gemeinsamen Leitung (VcomLi) gekoppelt ist, mittels der vertikalen Dummy-Datenleitung (DDL), während die Polarität der Datenspannung (ADATA) von der ersten Polarität zu der zweiten Polarität geändert wird, um den mindestens einen Kompensationskondensator (Cdc) durch die Kompensationsdatenspannung (ADDATA) aufzuladen, um Welligkeiten in der gemeinsamen Spannung (Vcom) zu reduzieren, die an die horizontalen gemeinsamen Leitungen (VcomL1, VcomL2, ... VcomLm) angelegt wird.

11. Verfahren nach Anspruch 10, wobei das Laden der analogen Kompensationsdatenspannung (ADDATA) in den mindestens einen Kompensationskondensator (Cdc) aufweist:
Erhöhen eines Pegels der analogen Kompensationsdatenspannung (ADDATA) von einem vorbestimmten minimalen Spannungspegel auf einen vorbestimmten maximalen Spannungspegel während eines Polaritätsänderungsintervalls, beginnend zu einem Zeitpunkt, an dem die Polarität der Datenspannung (ADATA) von der ersten Polarität zur zweiten Polarität geändert wird.

12. Verfahren nach Anspruch 11, ferner aufweisend:
Verringern des Pegels der analogen Kompensationsdatenspannung (ADDATA) von dem vorbestimmten maximalen Pegel auf den vorbestimmten minimalen Pegel während eines Polaritätserhaltungsintervalls, in dem die Polarität der Datenspannung (ADATA) auf der zweiten Polarität gehalten wird, nachfolgend auf das Polaritätsänderungsintervall,
wobei das Polaritätserhaltungsintervall länger ist als das Polaritätsänderungsintervall,
wobei, vorzugsweise, eine Länge des Polaritätsänderungsintervalls gleich einer horizontalen Ansteuerperiode ist und eine Länge des Polaritätserhaltungsintervalls gleich zwei oder mehr horizontalen Ansteuerperioden ist.

13. Verfahren nach einem der Ansprüche 10 bis 12 ferner aufweisend: Synchronisieren des Timings der analogen Kompensationsdatenspannung (ADDATA) mit einem Timing der Datenspannung (ADATA), um die analoge Kompensationsdatenspannung (ADDATA) mit der gleichen Zeitverzögerung an einen Kompensationskondensator (Cdc), der einer Zeile entspricht, bereitzustellen, mit der die Datenspannung (ADATA) einem Pixel (P) in dieser Zeile zugeführt wird.

14. Verfahren nach einem der Ansprüche 10 bis 13, wobei die erste Polarität eine positive Polarität ist und die zweite Polarität eine negative Polarität ist und wobei die analoge Kompensationsdatenspannung (ADDATA) eine positive Polarität hat.

## Revendications

1. Dispositif d'affichage à cristaux liquides, comprenant :
une pluralité de pixels (P) disposés en rangées et en colonnes sous forme de matrice ;
une pluralité de m lignes communes horizontales (VcomL1, ..., VcomLm) disposées dans la direction des rangées et couplées à une électrode commune (15) de la pluralité de pixels ; et au moins une ligne commune verticale (VcomLV) disposée dans la direction des colonnes et reliant les m lignes communes horizontales (VcomL1, ..., VcomLm) les unes aux autres ;
une ligne de données factice verticale (DDL) ;
un module d'alimentation (220) configuré pour fournir une tension commune (Vcom) à la au moins une ligne commune verticale (VcomL) ;
au moins un condensateur de compensation (Cdc) comprenant un motif conducteur (50), une électrode commune fictive (13) couplée à une ligne commune horizontale respective (VcomLi) et une couche isolante disposée entre l'électrode commune fictive (13) et le motif conducteur (50) ;
un pilote de données (240) couplé au moyen de la ligne de données fictive verticale (DDL) au motif conducteur (50) du au moins un condensateur de compensation (Cdc), le pilote de données
(240) étant configuré pour :
appliquer une tension de données (ADATA) présentant une première polarité à un pixel (P) de la pluralité de pixels (P) ;
changer ensuite la polarité de la tension de données (ADATA) de la première polarité à une seconde polarité ; et
appliquer une tension de données de compensation analogique (ADDATA) au moyen de la ligne de données fictive verticale (DDL) dans le au moins un condensateur de compensation (Cdc) tout en changeant la polarité de la tension de données (ADATA) de la première polarité à la seconde polarité, de manière à réduire les ondulations dans une tension commune (Vcom) appliquée aux lignes communes horizontales (VcomL1, ..., VcomLm) ;
le dispositif d'affichage à cristaux liquides comprenant en outre :
un contrôleur de temporisation (210) configuré pour générer des données de compensation numérique (DDATA) et fournir les données de compensation numérique (DDATA) au pilote de données (240),
dans lequel le pilote de données (240) est configuré pour convertir les données de compensation numérique (DDATA) en tension de données de compensation analogique (ADDATA).

2. Dispositif d'affichage à cristaux liquides selon la revendication 1, comprenant :
m condensateurs de compensation (Cdc), chacun des m condensateurs de compensation étant couplé à une ligne commune horizontale respective (VcomLi),
dans lequel la au moins une ligne commune verticale (VcomLV) est disposée à l'extérieur d'une région de réseau de pixels (100A), dans laquelle les pixels (P) sont disposés.

3. Dispositif d'affichage à cristaux liquides selon la revendication 2, dans lequel chacun des m condensateurs de compensation (Cdc) comprend :
une électrode commune fictive respective (13) qui part de la ligne commune horizontale respective (VcomLi),
un motif conducteur respectif (50) qui fait face à l'électrode commune fictive (13), et
une couche isolante respective disposée entre l'électrode commune fictive (13) et le motif conducteur (50).

4. Dispositif d'affichage à cristaux liquides selon la revendication 2 ou 3, dans lequel chacun des m condensateurs de compensation (Cdc) comprend un premier condensateur de compensation (Cdc1) et un second condensateur de compensation (Cdc2), dans lequel les premier et second condensateurs de compensation (Cdc1, Cdc2) sont disposés sur des côtés opposés d'une région de réseau de pixels (100A), dans laquelle les pixels (P) sont disposés.

5. Dispositif d'affichage à cristaux liquides selon l'une quelconque des revendications 2 à 4, dans lequel chaque pixel (P) comprend :
une électrode de pixel (17), et un condensateur à cristaux liquides (Clc) formé par l'électrode de pixel (17), l'électrode commune (15) et une couche de cristaux liquides disposée entre l'électrode de pixel (17) et l'électrode commune (15) ;
dans lequel une capacitance d'un condensateur de compensation (CdC) couplé à une ligne commune horizontale (VcomL) est égale ou supérieure à la somme des capacités des condensateurs à cristaux liquides (Clc) couplés à ladite ligne commune horizontale (VcomL),
dans lequel, de préférence, la capacité du condensateur de compensation (Cdc) couplé à ladite ligne commune horizontale (VcomL) est inférieure ou égale à 1,5 fois la somme des capacités des condensateurs à cristaux liquides (Clc) couplés à ladite ligne commune horizontale (VcomL).

6. Dispositif d'affichage à cristaux liquides selon l'une quelconque des revendications 1 à 5,
dans lequel la tension de données de compensation analogique (ADDATA) augmente d'un niveau de tension minimum prédéterminé à un niveau de tension maximum prédéterminé pendant un intervalle de changement de polarité, en commençant à un moment auquel la polarité de la tension de données (ADATA) passe de la première polarité à la seconde polarité, et diminue le niveau de la tension de données de compensation (ADDATA) du niveau maximum prédéterminé au niveau minimum prédéterminé pendant un intervalle de maintien de polarité suivant, dans lequel la polarité de la tension de données (ADATA) est maintenue à la seconde polarité,
dans lequel l'intervalle de maintien de la polarité est plus long que l'intervalle de changement de polarité,
dans lequel, de préférence, une longueur de l'intervalle de changement de polarité est égale à une période d'entraînement horizontal et une longueur de l'intervalle de maintien de la polarité est égale à deux périodes d'entraînement horizontal ou plus.

7. Dispositif d'affichage à cristaux liquides selon la revendication 6, dans lequel le niveau de tension minimal prédéterminé et le niveau de tension maximal prédéterminé de la tension de données de compensation analogique (ADDATA) sont fixés respectivement à une valeur minimale possible et à une valeur maximale possible de la tension de données (ADATA).

8. Dispositif d'affichage à cristaux liquides selon l'une quelconque des revendications 2 à 7, comprenant en outre :
un pilote de grille (230) ;
une pluralité de lignes de grille (GL1 à GLm) et de lignes de données (DL à DLn) disposées dans la direction des rangées et des colonnes, respectivement, et couplées au pilote de grille (230) et au pilote de données (240), respectivement, pour recevoir une impulsion de grille et la tension de données (ADATA), respectivement ;
l'au moins une ligne de données factice verticale (DDL) est disposée en parallèle avec les lignes de données (DL1, ..., DLn) et couplée au pilote de données (240) pour recevoir la tension de données de compensation analogique (ADDATA) ;
dans lequel chaque pixel (P) comprend un transistor de commutation couplé à une ligne de grille respective (GL1 à GLm) et à une ligne de données et configuré pour fournir la tension de données (ADATA) provenant du pilote de données (240) à une électrode de pixel (17) du pixel (P) lors de l'application de l'impulsion de grille provenant du pilote de grille (230) à la ligne de grille (GL1 à GLm) ;
dans lequel chaque rangée comprend au moins un transistor de commutation supplémentaire couplé à la au moins une ligne de données fictives verticale (DDL), à un condensateur de compensation (Cdc) correspondant à cette rangée, et à une ligne de grille (GL1 à GLm) couplée aux transistors de commutation des pixels (P) dans cette rangée, dans lequel l'au moins un transistor de commutation supplémentaire est configuré pour fournir la tension de données de compensation analogique (ADDATA) du pilote de données (240) au condensateur de compensation (Cdc) lors de l'application de l'impulsion de grille du pilote de grille (230) à la ligne de grille (GL1 à GLm),
dans lequel, de préférence, la au moins une ligne de données factice verticale (DDL) est disposée à l'extérieur d'une région de réseau de pixels (100A), dans laquelle les pixels (P) sont disposés.

9. Dispositif d'affichage à cristaux liquides selon la revendication 8, dans lequel le contrôleur de temporisation (210) est configuré pour synchroniser la temporisation de la tension de données de compensation (ADDATA) avec une temporisation de la tension de données (ADATA) de manière à fournir la tension de données de compensation (ADDATA) avec le même retard temporel à un condensateur de compensation (Cdc) correspondant à une rangée que la tension de données (ADATA) est fournie à un pixel (P) dans cette rangée.

10. Procédé de commande d'un dispositif d'affichage à cristaux liquides selon la revendication 1, le procédé comprenant :
la génération de données de compensation numérique (DDATA) par le contrôleur de temporisation (210) ;
la conversion des données de compensation numérique (DDATA) en tension de données de compensation analogique (ADDATA) par le pilote de données (240) ;
l'application d'une tension de données (ADATA) présentant une première polarité à un pixel (P) de la pluralité de pixels (P) par le pilote de données (240) ;
le changement ensuite de la polarité de la tension de données (ADATA) de la première polarité à une seconde polarité par le pilote de données (240) ; et
l'application de la tension de données de compensation analogique (ADDATA) au motif conducteur (50) du au moins un condensateur de compensation (Cdc) couplé à la ligne commune horizontale respective (VcomLi) au moyen de la ligne de données fictive verticale (DDL) tout en changeant la polarité de la tension de données (ADATA) de la première polarité à la seconde polarité, de façon à charger le au moins un condensateur de compensation (Cdc) par la tension de données de compensation (ADDATA) pour réduire les ondulations de la tension commune (Vcom) appliquée aux lignes communes horizontales (VcomL1, VcomL2, ... VcomLm).

11. Procédé selon la revendication 10, dans lequel le chargement de la tension de données de compensation analogique (ADDATA) dans le au moins un condensateur de compensation (Cdc) comprend :
l'augmentation d'un niveau de la tension de données de compensation analogique (ADDATA) d'un niveau de tension minimum prédéterminé à un niveau de tension maximum prédéterminé pendant un intervalle de changement de polarité, en commençant à un moment où la polarité de la tension de données (ADATA) est changée de la première polarité à la seconde polarité.

12. Procédé selon la revendication 11, comprenant en outre :
la diminution du niveau de la tension de données de compensation analogique (ADDATA) du niveau maximum prédéterminé au niveau minimum prédéterminé pendant un intervalle de maintien de polarité, dans lequel la polarité de la tension de données (ADATA) est maintenue à la seconde polarité, après l'intervalle de changement de polarité,
dans lequel l'intervalle de maintien de la polarité est plus long que l'intervalle de changement de polarité,
dans lequel, de préférence, une longueur de l'intervalle de changement de polarité est égale à une période d'entraînement horizontal et une longueur de l'intervalle de maintien de la polarité est égale à deux périodes d'entraînement horizontal ou plus.

13. Procédé selon l'une quelconque des revendications 10 à 12, comprenant en outre : la synchronisation de la temporisation de la tension de données de compensation analogique (ADDATA) avec une temporisation de la tension de données (ADATA) de façon à fournir la tension de données de compensation analogique (ADDATA) avec le même retard temporel à un condensateur de compensation (Cdc) correspondant à une rangée que la tension de données (ADATA) est fournie à un pixel (P) dans cette rangée.

14. Procédé selon l'une quelconque des revendications 10 à 13, dans lequel la première polarité est une polarité positive et la seconde polarité est une polarité négative, et dans lequel la tension de données de compensation analogique (ADDATA) présente une polarité positive.
